# EUROPEAN PATENT SPECIFICATION

(11) **EP 3 825 183 B1**
(45) Date of publication and mention of the grant of the patent: **03.08.2022**
(21) Application number: 19210884.3
(22) Date of filing: 22.11.2019
(51) Int. Cl.: B60R 7/00, B60P 7/08

(54) **ARRANGEMENT AND METHOD FOR SECURING A LOAD IN A VEHICLE**
ANORDNUNG UND VERFAHREN ZUM SICHERN EINER LADUNG IN EINEM FAHRZEUG
AGENCEMENT ET PROCÉDÉ POUR FIXER UNE CHARGE DANS UN VÉHICULE

(43) Date of publication of application: 26.05.2021
(73) Proprietor: Ningbo Geely Automobile Research & Development Co. Ltd., Hangzhou Bay New District Ningbo 315336 (CN)
(72) Inventor: NILSSON, Magnus, 448 37 FLODA (SE); JOHANSSON, Jonathan, 417 14 GÖTEBORG (SE)
(74) Representative: Zacco Sweden AB

(56) References cited:
- EP-A2- 1 371 521
- WO-A1-2007/056860
- DE-A1- 4 239 470
- DE-A1-102004 057 112
- DE-A1-102007 048 895
- DE-A1-102011 018 309
- FR-A1- 2 925 293
- US-A- 5 118 232

## Description

### TECHNICAL FIELD

The disclosure relates to a vehicle load-securing arrangement comprising a first load-securing device arranged to be attachable to a load-securing member and a first tensioning device arranged to be attached to the first load-securing device by a first tensioning member. The first load-securing device is arranged to be connected to a vehicle body part or a vehicle chassis part. The disclosure also relates to a method for securing a load in a vehicle.

### BACKGROUND ART

Today's vehicles comprise various means for securing a load in the luggage or storage compartment. One such means are load rings placed around the luggage compartment through which a luggage strap or similar can be fed and placed around a load to secure it in place. It can be difficult to tighten a strap placed around a load properly due to that the amount of space near the load ring can be limited. This may lead to that a load will not be secured as tightly as desired and can result in damage to the load and/or to the luggage compartment.

Document DE 10 2011 018 309 A1 shows a fastening arrangement according to the preamble of claim 1, for attaching a load in a vehicle luggage compartment. The fastening arrangement comprises a belt and a tensioning mechanism for tensioning the belt.

WO 2018/072981 A1 discloses a device for securing loads on a transport surface of a vehicle. The device comprises a flexible securing means fixed to two or more anchor points that can be wrapped around the load. The device comprises a tensioning device and a tension-measuring element for measuring the tension of the securing means.

The device of WO 2018/072981 A1 requires a tensioning device that is attached between the load rings of the luggage compartment and the flexible securing means. This can be difficult to attach properly if there is little space between the load and the load rings.

There is thus a need for improvement within the field of securing loads in the luggage or storage compartment of a vehicle.

### SUMMARY OF THE DISCLOSURE

An objective of the disclosure is to provide a load-securing arrangement and a method for securing a load in a vehicle. The objective achieved by the arrangement of claim 1 and the method of claim 12. Dependent claims provide advantageous embodiments.

One advantage with the arrangement according to the disclosure is that the first load-securing device of the arrangement, by means of the first tensioning device, manually or automatically can be used to secure a load inside the vehicle. As some loads can be difficult to secure properly due to their size or shape or due to physical restraints of the person loading the vehicle, the arrangement can assist in tightening a load-securing member that is used to secure a load.

A first force sensing means is arranged on the first load-securing device or the first tensioning device and arranged to sense a tensioning force exerted on the load-securing member by the first load-securing device. The first tensioning device increases the tension until a predetermined tensioning force exerted on the load-securing member by the first load-securing device is detected by the first force sensing means.

Some loads, such as cardboard boxes, soft plastic boxes or bags or similar may be flexible and can collapse if put undertoo much pressure or stress. In orderto prevent damage to such loads, a first force sensing means will shut off the tensioning of the tensioning means if the tensioning force exerted on the load-securing member by the first load-securing device exceeds a predetermined tensioning force.

The first load-securing device may be arranged to be connected to the vehicle body part or the vehicle chassis part with a resilient member.

The resilient member limits the travel of the first load-securing device in the axial direction as the first tensioning device is operated and thereby pulls on the first load-securing device to tighten the load-securing member. The resilient member may also assist in releasing the tension exerted by the load-securing member on the load when the first tensioning device is not operated as the first load-securing device is pushed in the opposite direction by the resilient member.

The first load-securing device may be arranged to be positioned underneath the loading surface in an inactive state and is arranged to protrude out of the loading surface in an active state. The first load-securing device may be put in the active state upon a user input or by the first load-securing device being exerted to an axial force.

If the first load-securing device is arranged to be positioned underneath the loading surface in an inactive state, i.e. when not in use, more of the loading space can be utilized as there will be no protrusions preventing some parts of the loading space to be used.

The arrangement may further comprise a second load-securing device arranged to be attachable to the load-securing member and to the first tensioning device by a second tensioning member. The second load-securing device is arranged to be connected to a vehicle body part or a vehicle chassis part and the second load-securing device is arranged to be movable in an axial direction of the second load-securing device in a second opening in a loading surface of a vehicle by operating the first tensioning device.

In a first example embodiment, the arrangement comprises a second load-securing device that works in tandem with the first load-securing device. In order to be able to provide tension from more than one load-securing device, and thereby reduce the amount of tension needing to be provided by a single load-securing device, a second load-securing device can be arranged to be attached to the first tensioning device. This allows the first tensioning device to provide tension to the load via the load-securing member by having two load-securing devices move in their respective axial directions.

The arrangement may further comprise a second load-securing device arranged to be attachable to the load-securing member and to a second tensioning device by a second tensioning member, wherein the second load-securing device is arranged to be connected to a vehicle body part or a vehicle chassis part, the second load-securing device is arranged to be movable in an axial direction of the second load-securing device in a second opening in a loading surface of a vehicle by operating the second tensioning device.

In a second example embodiment, the arrangement comprises a second load-securing device that works in tandem with the first load-securing device. In the second example embodiment, the second load-securing device can be arranged to be attached to a second tensioning device. This allows the first and second tensioning devices to provide tension to the load via the load-securing member by having two load-securing devices move in their respective axial directions.

In this way, different tension can be applied by the first and second load-securing devices on the load-securing member by having the first and second tensioning devices apply different tension on the first and second load-securing devices.

A second force sensing means may be arranged on the second load-securing device or the second tensioning device, where the second force sensing means is arranged to sense a tensioning force exerted on the load-securing member by the second load-securing device. The second tensioning device may increase the tension until a predetermined tensioning force exerted on the load-securing member by the second load-securing device is detected by the second force sensing means.

When using two load-securing devices, each being arranged to be connected to a separate tensioning device, it is as mentioned above, possible to apply different tension by the first and second load-securing devices. By having a second force sensing means arranged on the second load-securing device or the second tensioning device, it is possible to shut off the tensioning of the second tensioning device if a predetermined tensioning force is detected by the second force sensing means while still increasing the tensioning of the first tensioning device. This may be useful for irregularly shaped loads or loads with different materials in different part of the load.

Both the first and second force sensing means can have a safety function built in that stops the tensioning device if any force sensing means detects a sudden decrease in tensioning force after a steady increase. This would indicate that the load has compacted or changed shape, which can happen if for instance a cardboard box or a soft plastic container is the load. The safety function leads to that the tensioning device does not damage the load further. An alarm can also be transmitted, for instance aurally, visually, haptically or by message to a user's phone or the vehicle's human-machine interface.

The second load-securing device may be arranged to be connected to the vehicle body part or a vehicle chassis part with a resilient member.

The resilient member of the second load-securing device limits the travel of the second load-securing device in the axial direction as the first or second tensioning device is operated and thereby pulls on the second load-securing device to tighten the load-securing member. The resilient member also assists in releasing the tension exerted by the load-securing member on the load when the second tensioning device is not operated as the second load-securing device is pushed in the opposite direction by the resilient member.

The first and/or second tensioning device may be one of:
- Automatic ratchet strap,
- Belt retractor,
- Manual pulley system.

The first and second tensioning device can be automatic or manual. The first, and if applicable, second force sensing means can be used with any one of the mentioned examples of tensioning devices.

The first tensioning device and/or the second tensioning device may be arranged to apply tension to the first load-securing device and/or the second load-securing device upon receiving a tensioning trigger, wherein the tensioning trigger is one of or a combination of:
- The vehicle starting,
- Identification of driver and/or passenger seated in the vehicle,
- Activation by driver or passenger,
- Closing of the vehicle's storage compartment.

When the load is ready to be secured and the load-securing member is in place over and/or around the load, the first and/or second tensioning devices may start to apply tension to the first load-securing device and/or the second load-securing device upon receiving a tensioning trigger. As a first non-limiting example, the first tensioning device and/or the second tensioning device can start the tensioning upon identification of a driver and/or passenger seated in the vehicle and the vehicle starting. As a further non-limiting example, a switch in for instance the vehicle's centre console, in a vehicle door panel or in the luggage compartment can be activated by the driver or a passenger as a tensioning trigger. This can be done with the motor running or not. Activation by the driver or passenger can be made as a one-touch function where one press automatically applies tensions to the first and/or second load-securing devices until a predetermined tensioning force is measured. Activation by the driver or passenger can also be made as a continuous command where the switch can be pressed until a desired tensioning has been achieved or until a predetermined tensioning force is measured. Further combinations and other examples of tensioning triggers are of course conceivable.

The first and/or second tensioning device may be arranged to release tension of the first and/or second load-securing device upon receiving a release trigger.

When the load is ready to be unloaded from the vehicle, the tension of the load-securing member must be released in order for the load-securing member to be removed from the load. The tension of the first and/or second load-securing device must be released in order to do this. In order to control the release of tension, the arrangement may receive a release trigger. The release trigger can for instance be one of or a combination of the vehicle's motor being turned off, detection of driver and/or passenger exiting the vehicle, manual release activation by driver or passenger or closing of the vehicle's storage compartment. As a first non-limiting example, the motor being turned off and the driver and all passengers having exited the vehicle can be a release trigger. As a further non-limiting example, a switch in for instance the vehicle's centre console, in a vehicle door panel or in the luggage compartment can be activated by the driver or a passenger as a release trigger. This can be done with the motor running or not. Further combinations and other examples of release triggers are of course conceivable.

The disclosure also relates to a vehicle comprising a vehicle load-securing arrangement according to the above description.

The disclosure also relates to a method for securing a load in a vehicle according to claim 12

The method may further comprise:
- attaching a second load-securing device to the vehicle body arranged to be movable in an axial direction of the second load-securing device in a second opening in the loading surface of a vehicle,
- arranging a first tensioning device or a second tensioning device to be attached to the second load-securing device by a second tensioning member,
- operating the first tensioning device and/or the second tensioning device to increase or decrease tension on the load-securing member.

The method may further comprise:
- operating the first tensioning device upon receipt of a tensioning or a release trigger.

The method provides the same advantages as described in conjunction with the arrangement.

### BRIEF DESCRIPTION OF THE DRAWINGS

Figure 1a schematically shows a vehicle load-securing arrangement according to a first embodiment of the disclosure in an inactive state,
Figure 1b schematically shows a vehicle load-securing arrangement according to the first embodiment of the disclosure in an active state without tension applied to the load,
Figure 1c schematically shows a vehicle load-securing arrangement according to the first embodiment of the disclosure in an active state with tension applied to the load,
Figure 2 schematically shows a vehicle load-securing arrangement according to a second embodiment of the disclosure in an active state,
Figure 3 schematically shows a vehicle load-securing arrangement according to a third embodiment of the disclosure in an active state,
Figures 4a and 4b schematically show a vehicle load-securing arrangement according to a fourth embodiment of the disclosure in an active state,
Figure 5 schematically shows a vehicle comprising a vehicle load-securing arrangement according to the disclosure.

### DETAILED DESCRIPTION

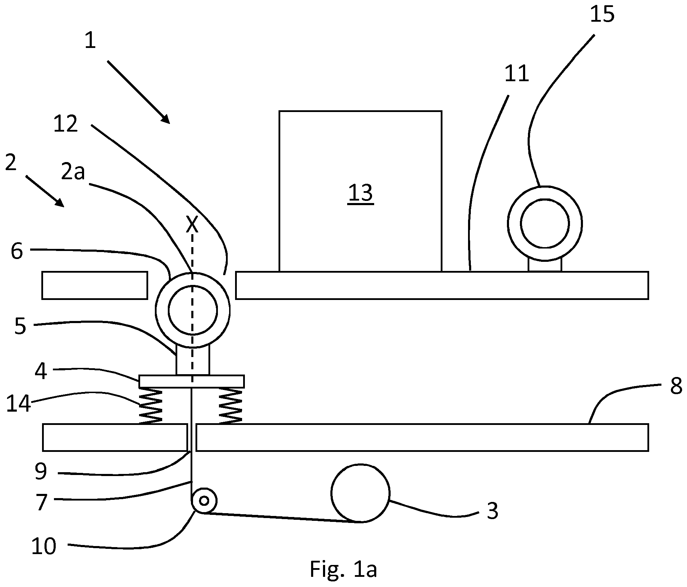

Figure 1a schematically shows a vehicle load-securing arrangement 1 according to a first embodiment of the disclosure in an inactive state. The vehicle load-securing arrangement 1 comprises a first load-securing device 2 arranged to be attachable to a load-securing member (not shown) and a first tensioning device 3. The first load-securing device 2 comprises a base 4 attached to a stem 5 which in turn is attached to a load-securing loop 6 or similar. In the load-securing loop 6, an end of the load-securing member can be attached. The load-securing loop 6 can be firmly attached to the stem 5 or be attached in such a way that it can rotate and/or change angle relative an axial direction.

The first tensioning device 3 is arranged to be attached to the first load-securing device 2 by a first tensioning member 7. The first load-securing device 2 is arranged to be connected to a vehicle body part 8 or a vehicle chassis part 8, in figure 1a illustrated by a level surface. The vehicle body part 8 or a vehicle chassis part 8 can also have other shapes depending on where the connection between the vehicle body part 8 or vehicle chassis part 8 and the first load-securing device 2 is most efficient. The vehicle body part 8 or a vehicle chassis part 8 may comprise a first tensioning member opening 9 through which the first tensioning member 7 runs to the first tensioning device 3 via a first pulley 10. The first pulley 10 is optional and can be used to place the first tensioning device 3 in a suitable location in the vehicle. Also more than one pulley 10 between the first tensioning device 3 and the first load-securing device 2 is conceivable within the scope of the disclosure.

In the inactive state, the first load-securing device 2 is positioned such that an uppermost part 2a of the first load-securing device 2 does not extend above a loading surface 11 of the vehicle. The first load-securing device 2 is arranged to be movable in an axial direction X of the first load-securing device 2 in a first opening 12 in the loading surface 11 of the vehicle by operating the first tensioning device 3. The axial direction X is the direction running through the length of the first load-securing device 2, i.e. the direction extending from the base 4 and through the stem 5. In figure 1a, this direction is upwards. On the loading surface 11, a load 13 is positioned and waiting to be secured.

In figure 1a, the first load-securing device 2 is arranged to be connected to the vehicle body part 8 or the vehicle chassis part 8 with a resilient member 14. The resilient member 14 may for instance be a coil spring, a volute spring or a disk spring. The resilient member 14 can be biased for mainly compression, mainly extension or something in between such that when the first load-securing device 2 is in the inactive state, the resilient member 14 may experience neither compression nor extension.

In the example of figure 1a, the first load-securing device 2 is kept in the inactive state by that the first tensioning device 3 has pulled down the first load-securing device 2. As an alternative, the stem 5 or the base 4 of the first load-securing device 2 can be movably attached to the vehicle body part 8 or the vehicle chassis part 8, such that the first load-securing device 2 can be moved in the axial direction by an electric motor or by manual force.

In the first embodiment of the vehicle load-securing arrangement 1, a second load-securing device 15 arranged to be attachable to the load-securing member is fixedly attached to the loading surface 11.

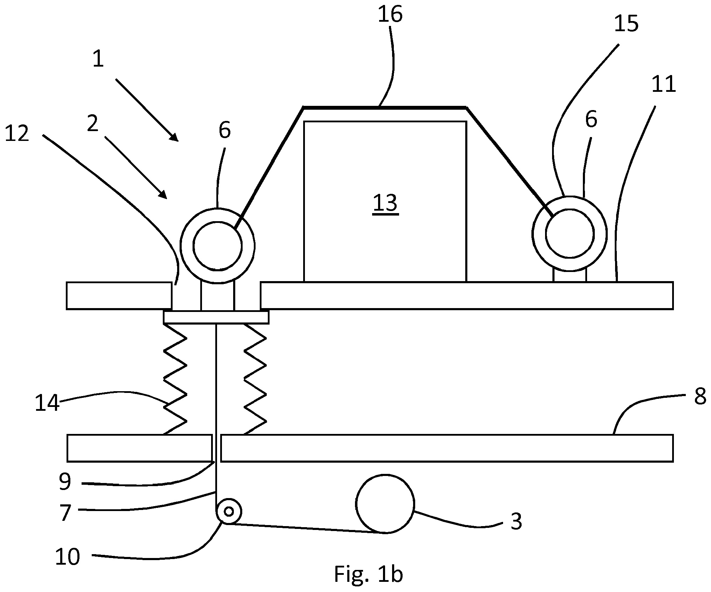

Figure 1b schematically shows the vehicle load-securing arrangement 1 according to the first embodiment of the disclosure in an active state without tension applied to the load 13 by a load-securing member 16. The vehicle load-securing arrangement 1 may be put in the active state by for instance detecting placement of the load-securing member 16 in the load-securing loop 6 of the first load-securing device 2, by pulling and releasing the first load-securing device 2, i.e. exerting an axial force on the first load-securing device 2, or by activation by a user interface, either inside a luggage compartment of the vehicle or in a human-machine interface inside the vehicle.

In the example of figure 1b, the first load-securing device 2 has been pushed upwards in the axial direction of the first load-securing device 2 by the resilient member 14 such that it extends through and out of the loading surface 11. In this way, the load-securing loop 6 is easily accessible. In figure 1b, the load-securing member 16 has been attached to the load-securing loops 6 of the first load-securing device 2 and the second load-securing device 15 respectively. No tension has yet been applied and there is some slack of the load-securing member 16.

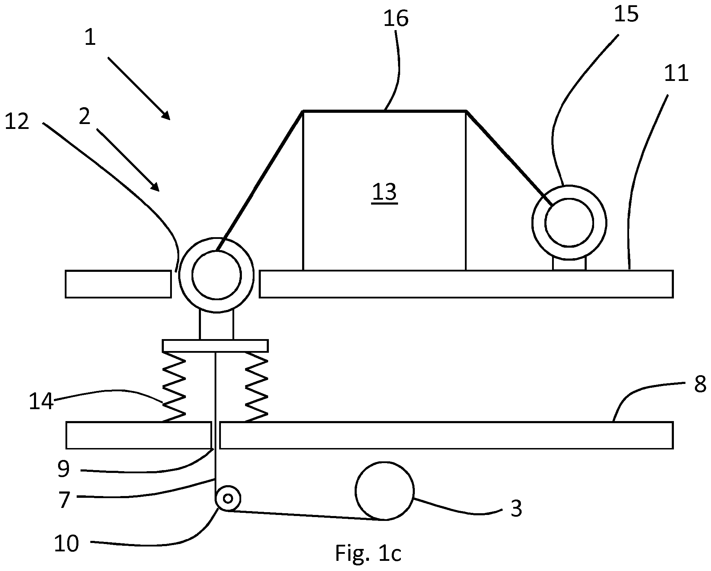

Figure 1c schematically shows a vehicle load-securing arrangement 1 according to the first embodiment of the disclosure in an active state with tension applied to the load 13. When the first tensioning device 3 has been triggered, for instance by one or a combination of the vehicle starting, identification of driver and/or passenger seated in the vehicle, activation by driver or passenger and closing of the vehicle's storage compartment, the first tensioning device 3 applies tension to the first tensioning member 7 resulting in that the first load-securing device 2 is pulled downwards in the axial direction, thereby tightening the load-securing member 16 around the load 13. In figures 1b and 1c, the load-securing member 16 is placed on top of the load 13. This is for illustrative purposes only and the load-securing member 16 can be placed on various parts of the load 13 depending on what the load 13 looks like.

A first force sensing means (not shown) is arranged on the first load-securing device 2 or the first tensioning device 3 and arranged to sense a tensioning force exerted on the load-securing member 16 by the first load-securing device 2. The first tensioning device 3 is arranged to increase the tensioning force on the first tensioning member 7, and thereby on the load-securing member 16 by the first load-securing device 2 until a predetermined tensioning force exerted on the load-securing member 16 by the first load-securing device 2 is detected by the first force sensing means. The first force sensing means can be any suitable force sensing means known in the art.

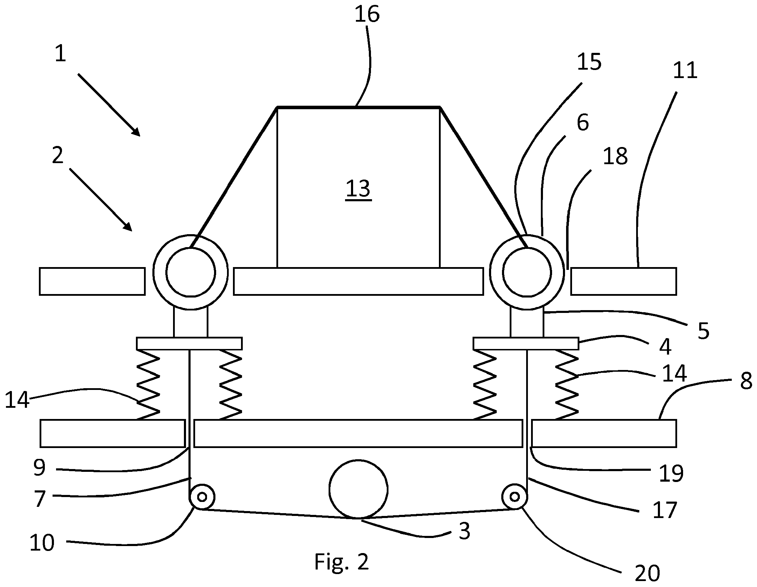

Figure 2 schematically shows a vehicle load-securing arrangement 1 according to a second embodiment of the disclosure in an active state. The second embodiment differs from the first embodiment in that the second load-securing device 15 also is arranged to be attachable to the load-securing member 16 and to the first tensioning device 3 by a second tensioning member 17. The second load-securing device 15 comprises similar parts 4, 5, 6 as the first load-securing device 2 and is arranged to be connected to a vehicle body part 8 or a vehicle chassis part 8, with or without a resilient member 14 in the same way as described above for the first load-securing device 2. The second load-securing device 15 is arranged to be movable in an axial direction of the second load-securing device 15 in a second opening 18 in the loading surface 11 of the vehicle by operating the first tensioning device 3.

The vehicle body part 8 or a vehicle chassis part 8 comprises in this example a second tensioning member opening 19 through which the first tensioning member 7 runs to the first tensioning device 3 via a second pulley 20. The second pulley 20 is optional and can together with the first pulley 10 be used to place the first tensioning device 3 in a suitable location in the vehicle. Also more than one pulley 20 between the first tensioning device 3 and the second load-securing device 15 is conceivable within the scope of the disclosure.

In this example embodiment, both the first and the second load-securing devices 2, 15 move at the same time when the first tensioning device 3 is triggered. This provides an even distribution of the force exerted by the load-securing member 16 on the load 13. It is possible to arrange the attachment of the first load-securing device 2 and the second load-securing device 15 to the vehicle body part 8 or vehicle chassis part 8 by resilient members 14 with different spring constants if different forces exerted by the load-securing member 16 is desired on different parts of the load. Using different sized pulleys 10, 20 or different number of pulleys 10, 20 may also lead to different forces acting on the load 13.

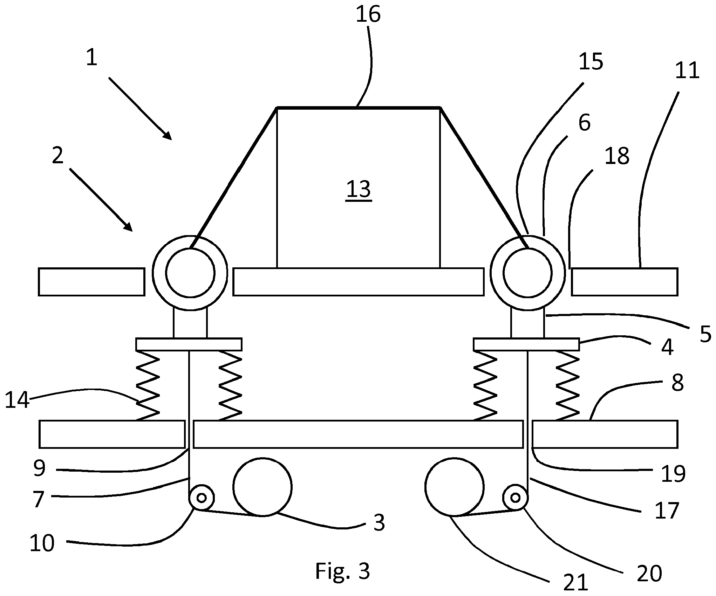

Figure 3 schematically shows a vehicle load-securing arrangement 1 according to a third embodiment of the disclosure in an active state. The difference between the second embodiment and the third embodiment is that in the third embodiment, the first load-securing device 2 is arranged to be attached to the first tensioning device 3 by the first tensioning member 7 and the second load-securing device 15 is arranged to be attached to a second tensioning device 21 by the second tensioning member 17. In this way, the first and second load-securing devices 2, 15 can be operated separately or together, depending on the desired setting. The first and second tensioning devices 3, 21 can be arranged to exert different tension on the first and second tensioning members 7, 17 respectively to control the force exerted by the load-securing member 16 on the load 13.

When using a second load-securing device 15, a second force sensing means (not shown) may be arranged on the second load-securing device 15 or the second tensioning device 21 (if present). The second force sensing means is arranged to sense a tensioning force exerted on the load-securing member 16 by the second load-securing device 15 in the same way as described above for the first force sensing means. The second tensioning device 21 increases the tension until a predetermined tensioning force exerted on the load-securing member 16 by the second load-securing device 15 is detected by the second force sensing means. The first and second force sensing means can be set to detect the same predetermined tensioning force by each of the force sensing means or be set to detect different predetermined tensioning forces. The one or different predetermined tensioning forces can be set automatically or manually depending on the load 13 to be secured. Automatic setting can for instance be made by entering the material of the load 13 to be secured, pre-set tensioning forces can be drawn from a look-up table.

In the figures, the first and/or second tensioning devices 3, 21 is one of an automatic ratchet strap, a belt retractor (i.e. a mechanism similar to the ones used to automatically retract seat belts) or a manual pulley system. In the manual pulley system, the first and/or second tensioning devices are operated by hand and can comprise a string, rope, strap or similar wound to a drum that can be releasably locked in various positions corresponding to various amount of a tensioning force.

Alternatively, the first and second tensioning devices 3, 21 could comprise a Bowden cable system or one or more hydraulic cylinders where the piston is attached to the first and/or second tensioning members 7, 17. Combinations of the mentioned tensioning devices are also possible.

The first and/or second tensioning devices 3, 21 are arranged to release the tension of the first and/or second load-securing devices 2, 15 on the load-securing member 16 upon receiving a release trigger. This causes the load securing device or devices 2, 15 to return to the active state of figure 1b, where there is no tension applied to the load-securing member 16. The load 13 can thereby be removed from the loading surface 11.

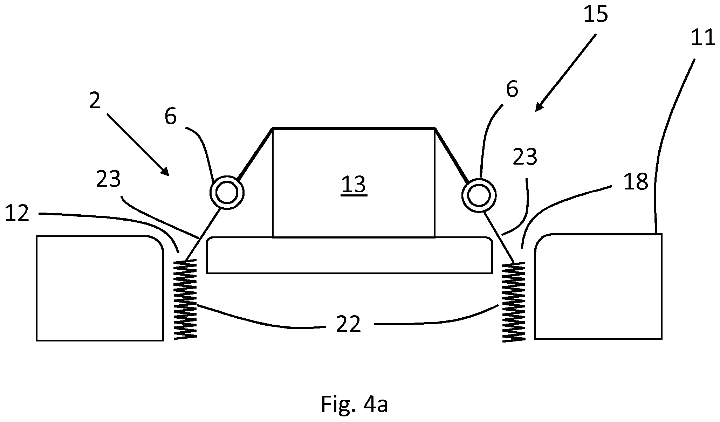

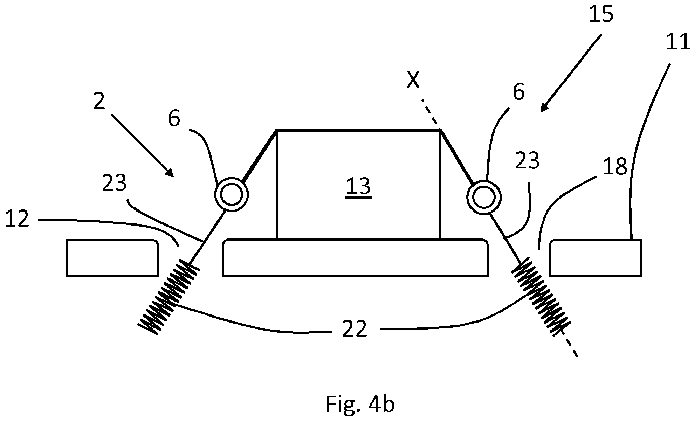

Figures 4a and 4b schematically show a vehicle load-securing arrangement 1 according to a fourth embodiment of the disclosure in an active state. In figures 4a and 4b, the first and second load-securing devices 2, 15 comprise threaded rods 22 to which the load-securing loop 6 is attached by means of a flexible attaching member 23. The threaded rods 22 can be moved upwards and downwards along their respective axial directions by means of a motor driving a worm gear, screw actuator or similar to cause the threaded rod 22 to move. In figure 4a, the first and second load-securing devices 2, 15 are arranged to move essentially perpendicular to a horizontal plane of the loading surface 11.

In figure 4b, the first and second load-securing devices 2, 15 are arranged at an angle relative the loading surface 11. In this example, the axial direction X of the respective load-securing devices 2, 15 are also at an angle relative the loading surface 11.

Also, as seen from the figures, the edges of the first and second openings 12, 18 are rounded such that the flexible attaching member 23 will not wear if the flexible attaching member 23 lies against the edges when the load-securing devices 2, 15 tightens the load-securing member 16 against the load 13.

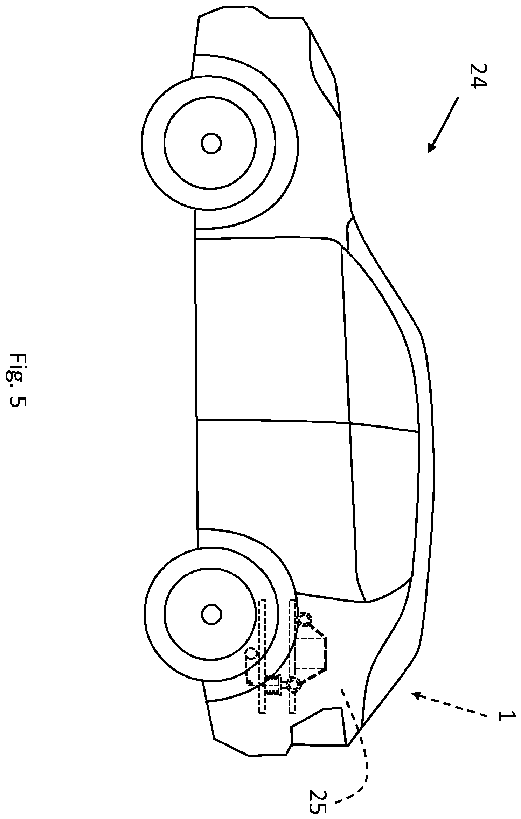

Figure 5 schematically shows a vehicle 24 comprising a vehicle load-securing arrangement 1 according to the disclosure. As can be seen, the vehicle load-securing arrangement 1 is placed in the luggage compartment 25 of the vehicle 24.

For a larger vehicle, such as a van, the vehicle load-securing arrangement 1 is placed in a storage compartment 25. The details are otherwise the same. The arrangement according to the disclosure can be used in all types of vehicles, such as cars, vans, airplanes, ships, trains etc.

Although the disclosure has been illustrated and described in detail in the drawings and foregoing description, such illustrations and descriptions are to be considered illustrative or exemplary and the disclosure is not limited to the disclosed example embodiments. For instance, the load-securing devices 2, 15 of figures 1a-3 can also be arranged at angle relative the horizontal plane of the loading surface 11, similar to the example embodiment of figure 4b. Also, the load-securing devices 2, 15 could comprise hydraulic or pneumatic cylinders with the cylinder tube forming the base 4 and the piston forming the stem 5 to which a load-securing loop 6 is attached. The hydraulic cylinder is for instance powered by a hydraulic pump, while the pneumatic cylinder may be powered by a pneumatic pump.

## Claims

1. Vehicle load-securing arrangement (1) comprising a first load-securing device (2) arranged to be attachable to a load-securing member (16) and a first tensioning device (3) arranged to be attached to the first load-securing device (2) by a first tensioning member (7), wherein the first load-securing device (2) is arranged to be connected to a vehicle body part (8) or a vehicle chassis part (8), wherein the first load-securing device (2) is arranged to be movable in an axial direction of the first load-securing device (2) in a first opening in a loading surface (11) of a vehicle (24) by operating the first tensioning device (3) **characterized in that** a first force sensing means is arranged on the first load-securing device (2) or the first tensioning device (3) and arranged to sense a tensioning force exerted on the load-securing member (16) by the first load-securing device (2), wherein the first tensioning device (3) increases the tension until a predetermined tensioning force exerted on the load-securing member (16) by the first load-securing device (2) is detected by the first force sensing means.

2. Vehicle load-securing arrangement (1) according to any one of the preceding claims, wherein the first load-securing device (2) is arranged to be connected to the vehicle body part (8) or the vehicle chassis part (8) with a resilient member (14).

3. Vehicle load-securing arrangement (1) according to any of the preceding claims, wherein the first load-securing device (2) is arranged to be positioned underneath the loading surface (11) in an inactive state and is arranged to protrude out of the loading surface (11) in an active state and wherein the first load-securing device (2) is put in the active state upon a user input or by the first load-securing device (2) being exerted to an axial force.

4. Vehicle load-securing arrangement (1) according to any one of the preceding claims, wherein the arrangement (1) further comprises a second load-securing device (15) arranged to be attachable to the load-securing member (16) and to the first tensioning device (3) by a second tensioning member (17), wherein the second load-securing device (15) is arranged to be connected to a vehicle body part (8) or a vehicle chassis part (8), the second load-securing device (15) is arranged to be movable in an axial direction of the second load-securing device (15) in a second opening (18) in the loading surface (11) of the vehicle (24) by operating the first tensioning device (3).

5. Vehicle load-securing arrangement (1) according to any one of claims 1-3, wherein the arrangement (1) further comprises a second load-securing device (15) arranged to be attachable to the load-securing member (16) and to a second tensioning device (21) by a second tensioning member (17), wherein the second load-securing device (15) is arranged to be connected to a vehicle body part (8) or a vehicle chassis part (8), the second load-securing device (15) is arranged to be movable in an axial direction of the second load-securing device (15) in a second opening (18) in the loading surface (11) of the vehicle (24) by operating the second tensioning device (21).

6. Vehicle load-securing arrangement (1) according to claim 5, wherein a second force sensing means is arranged on the second load-securing device (15) or the second tensioning device (21), the second force sensing means being arranged to sense a tensioning force exerted on the load-securing member (16) by the second load-securing device (15), wherein the second tensioning device (21) increases the tension until a predetermined tensioning force exerted on the load-securing member (16) by the second load-securing device (15) is detected by the second force sensing means.

7. Vehicle load-securing arrangement (1) according to any one of claims 4-6, wherein the second load-securing device (15) is arranged to be connected to the vehicle body part (8) or a vehicle chassis part (8) with a resilient member (14).

8. Vehicle load-securing arrangement (1) according to any one of the preceding claims, wherein the first and/or second tensioning device (3, 21) is one of:
- automatic ratchet strap,
- belt retractor,
- manual pulley system,
- threaded rod connected to a worm gear or screw actuator,
- hydraulic cylinder and piston.

9. Vehicle load-securing arrangement (1) according to any one of the preceding claims, wherein the first tensioning device (3) and/or the second tensioning device (21) is arranged to apply tension to the first load-securing device (2) and/or the second load-securing device (15) upon receiving a tensioning trigger, wherein the tensioning trigger is one of:
- the vehicle (24) starting,
- identification of driver and/or passenger seated in the vehicle (24),
- activation by driver or passenger,
- closing of the vehicle's (24) luggage/storage compartment (25).

10. Vehicle load-securing arrangement (1) according to any one of the preceding claims, wherein the first and/or second tensioning device (3, 21) are arranged to release tension of the first and/or second load-securing device (2, 15) upon receiving a release trigger.

11. Vehicle (24) comprising a vehicle load-securing arrangement (1) according to any one of the preceding claims.

12. Method for securing a load (13) in a vehicle (24), wherein the method comprises:
- attaching a first load-securing device (2) to a vehicle body part (8) or a vehicle chassis part (8) arranged to be movable in an axial direction of the first load-securing device (2) in a first opening (12) in a loading surface (11) of the vehicle (24), wherein a load-securing member (16) is attached to the first load-securing device (2),
- arranging a first tensioning device (3) to be attached to the first load-securing device (2) by a first tensioning member (7),
- arranging a first force sensing means on the first load-securing device (2) or the first tensioning device (3) and arranged to sense a tensioning force exerted on the load-securing member (16) by the first load-securing device (2),
- operating the first tensioning device (3) to increase or decrease tension on the load-securing member (16), wherein the first tensioning device (3) increases the tension until a predetermined tensioning force exerted on the load-securing member (16) by the first load-securing device (2) is detected by the first force sensing means.

13. Method according to claim 12, wherein the method comprises:
- attaching a second load-securing device (15) to the vehicle body part (8) or vehicle chassis part (8) arranged to be movable in an axial direction of the second load-securing device (15) in a second opening (18) in the loading surface (11) of the vehicle (24),
- arranging a first tensioning device (3) or a second tensioning device (21) to be attached to the second load-securing device (15) by a second tensioning member (17),
- operating the first tensioning device (3) and/or the second tensioning device (21) to increase or decrease tension on the load-securing member (16).

14. Method according to claim 12 or 13, wherein the method comprises:
- operating the first tensioning device (3) upon receipt of a tensioning or a release trigger.

## Patentansprüche

1. Fahrzeugladungssicherungsanordnung (1) umfassend eine erste Ladungssicherungsvorrichtung (2), die dafür eingerichtet ist, an einem Ladungssicherungselement (16) befestigbar zu sein, und eine erste Spannvorrichtung (3), die dafür eingerichtet ist, an der ersten Ladungssicherungsvorrichtung (2) durch ein erstes Spannelement (7) befestigt zu werden, wobei die erste Ladungssicherungsvorrichtung (2) dafür eingerichtet ist, mit einem Fahrzeugkörperteil (8) oder einem Fahrzeugfahrgestellteil (8) verbunden zu werden, wobei die erste Ladungssicherungsvorrichtung (2) dafür eingerichtet ist, in einer axialen Richtung der ersten Ladungssicherungsvorrichtung (2) in eine erste Öffnung in einer Ladefläche (11) eines Fahrzeugs (24) durch Betätigen der ersten Spannvorrichtung (3) bewegbar zu sein, **dadurch gekennzeichnet, dass** ein erstes Krafterkennungsmittel auf der ersten Ladungssicherungsvorrichtung (2) oder der ersten Spannvorrichtung (3) angeordnet ist und dafür eingerichtet ist, eine Spannkraft zu erkennen, die durch die erste Ladungssicherungsvorrichtung (2) auf das Ladungssicherungselement (16) ausgeübt wird, wobei die erste Spannvorrichtung (3) die Spannung erhöht bis eine vorgegebene Spannkraft, die durch die erste Ladungssicherungsvorrichtung (2) auf das Ladungssicherungselement (16) ausgeübt wird, durch das erste Krafterkennungsmittel detektiert wird.

2. Fahrzeugladungssicherungsanordnung (1) nach einem der vorgehenden Ansprüche, wobei die erste Ladungssicherungsvorrichtung (2) dafür eingerichtet ist, mit dem Fahrzeugkörperteil (8) oder dem Fahrzeugfahrgestellteil (8) durch ein nachgiebiges Element (14) verbunden zu werden.

3. Fahrzeugladungssicherungsanordnung (1) nach einem der vorgehenden Ansprüche, wobei die erste Ladungssicherungsvorrichtung (2) dafür eingerichtet ist, in einem inaktiven Zustand unterhalb der Ladefläche (11) positioniert zu werden und dafür eingerichtet ist, in einem aktiven Zustand aus der Ladefläche (11) hervorzuragen, und wobei die erste Ladungssicherungsvorrichtung (2) bei einer Benutzereingabe oder wenn eine axiale Kraft auf die erste Ladungssicherungsvorrichtung (2) ausgeübt wird in den aktiven Zustand versetzt wird.

4. Fahrzeugladungssicherungsanordnung (1) nach einem der vorgehenden Ansprüche, wobei die Anordnung (1) weiter eine zweite Ladungssicherungsvorrichtung (15) umfasst, die dafür eingerichtet ist, am Ladungssicherungselement (16) und an der ersten Spannvorrichtung (3) durch ein zweites Spannelement (17) befestigbar zu sein, wobei die zweite Ladungssicherungsvorrichtung (15) dafür eingerichtet ist, mit einem Fahrzeugkörperteil (8) oder einem Fahrzeugfahrgestellteil (8) verbunden zu werden, die zweite Ladungssicherungsvorrichtung (15) dafür eingerichtet ist, in einer axialen Richtung der zweiten Ladungssicherungsvorrichtung (15) in eine zweite Öffnung (18) in der Ladefläche (11) des Fahrzeugs (24) durch Betätigen der ersten Spannvorrichtung (3) bewegbar zu sein.

5. Fahrzeugladungssicherungsanordnung (1) nach einem der Ansprüche 1-3, wobei die Anordnung (1) weiter eine zweite Ladungssicherungsvorrichtung (15) umfasst, die dafür eingerichtet ist, am Ladungssicherungselement (16) und an einer zweiten Spannvorrichtung (21) durch ein zweites Spannelement (17) befestigbar zu sein, wobei die zweite Ladungssicherungsvorrichtung (15) dafür eingerichtet ist, mit einem Fahrzeugkörperteil (8) oder einem Fahrzeugfahrgestellteil (8) verbunden zu werden, die zweite Ladungssicherungsvorrichtung (15) dafür eingerichtet ist, in einer axialen Richtung der zweiten Ladungssicherungsvorrichtung (15) in eine zweite Öffnung (18) in der Ladefläche (11) des Fahrzeugs (24) durch Betätigen der zweiten Spannvorrichtung (21) bewegbar zu sein.

6. Fahrzeugladungssicherungsanordnung (1) nach Anspruch 5, wobei ein zweites Krafterkennungsmittel auf der zweiten Ladungssicherungsvorrichtung (15) oder der zweiten Spannvorrichtung (21) angeordnet ist, indem das zweite Krafterkennungsmittel dafür eingerichtet ist, eine Spannkraft zu erkennen, die durch die zweite Ladungssicherungsvorrichtung (15) auf das Ladungssicherungselement (16) ausgeübt wird, wobei die zweite Spannvorrichtung (21) die Spannung erhöht bis eine vorgegebene Spannkraft, die durch die zweite Ladungssicherungsvorrichtung (15) auf das Ladungssicherungselement (16) ausgeübt wird, durch das zweite Krafterkennungsmittel detektiert wird.

7. Fahrzeugladungssicherungsanordnung (1) nach einem der Ansprüche 4-6, wobei die zweite Ladungssicherungsvorrichtung (15) dafür eingerichtet ist, mit dem Fahrzeugkörperteil (8) oder einem Fahrzeugfahrgestellteil (8) durch ein nachgiebiges Element (14) verbunden zu werden.

8. Fahrzeugladungssicherungsanordnung (1) nach einem der vorgehenden Ansprüche, wobei die erste und/oder zweite Spannvorrichtung (3, 21) eine von den folgenden ist:
- automatischer Ratschengurt,
- Gurtaufroller,
- manuelles Umlenkrollensystem,
- Gewindestange, die mit einem Schneckenantrieb oder einem Schraubenstellantrieb verbunden ist,
- Hydraulikzylinder und -Kolben.

9. Fahrzeugladungssicherungsanordnung (1) nach einem der vorgehenden Ansprüche, wobei die erste Spannvorrichtung (3) und/oder die zweite Spannvorrichtung (21) dafür eingerichtet ist, beim Empfangen eines Spannungsauslösers Spannung auf die erste Ladungssicherungsvorrichtung (2) und/oder die zweite Ladungssicherungsvorrichtung (15) anzulegen, wobei der Spannungsauslöser einer von den folgenden ist:
- Anfahren des Fahrzeugs (24),
- Identifizieren eines Fahrers und/oder Beifahrers, der im Fahrzeug (24) sitzt,
- Aktivieren durch den Fahrer oder Beifahrer,
- Schließen des Lade-/Gepäckraums (25) des Fahrzeugs (24).

10. Fahrzeugladungssicherungsanordnung (1) nach einem der vorgehenden Ansprüche, wobei die erste und/oder zweite Spannvorrichtung (3, 21) dafür eingerichtet sind, beim Empfangen eines Freigabeauslösers die Spannung der ersten und/oder zweiten Ladungssicherungsvorrichtung (2, 15) freizugeben.

11. Fahrzeug (24), das eine Fahrzeugladungssicherungsanordnung (1) nach einem der vorgehenden Ansprüche umfasst.

12. Verfahren zum Sichern einer Ladung (13) in einem Fahrzeug (24), wobei das Verfahren Folgendes umfasst:
- Befestigen einer ersten Ladungssicherungsvorrichtung (2) an einem Fahrzeugkörperteil (8) oder einem Fahrzeugfahrgestellteil (8), eingerichtet um in einer axialen Richtung der ersten Ladungssicherungsvorrichtung (2) in eine erste Öffnung (12) in einer Ladefläche (11) eines Fahrzeugs (24) bewegbar zu sein, wobei ein Ladungssicherungselement (16) an der ersten Ladungssicherungsvorrichtung (2) befestigt ist,
- Anordnen einer ersten Spannvorrichtung (3), die an der ersten Ladungssicherungsvorrichtung (2) durch ein erstes Spannelement (7) befestigt werden soll,
- Anordnen eines ersten Krafterkennungsmittels auf der ersten Ladungssicherungsvorrichtung (2) oder der ersten Spannvorrichtung (3) und eingerichtet zum Erkennen einer Spannkraft, die durch die erste Ladungssicherungsvorrichtung (2) auf das Ladungssicherungselement (16) ausgeübt wird,
- Betätigen der ersten Spannvorrichtung (3) zum Erhöhen oder Verringern der Spannung auf dem Ladungssicherungselement (16), wobei die erste Spannvorrichtung (3) die Spannung erhöht bis eine vorgegebene Spannkraft, die durch die erste Ladungssicherungsvorrichtung (2) auf das Ladungssicherungselement (16) ausgeübt wird, durch das erste Krafterkennungsmittel detektiert wird.

13. Verfahren nach Anspruch 12, wobei das Verfahren Folgendes umfasst:
- Befestigen einer zweiten Ladungssicherungsvorrichtung (15) am Fahrzeugkörperteil (8) oder Fahrzeugfahrgestellteil (8), eingerichtet um in einer axialen Richtung der zweiten Ladungssicherungsvorrichtung (15) in eine zweite Öffnung (18) in der Ladefläche (11) des Fahrzeugs (24) bewegbar zu sein,
- Anordnen einer ersten Spannvorrichtung (3) oder einer zweiten Spannvorrichtung (21), die an der zweiten Ladungssicherungsvorrichtung (15) durch ein zweites Spannelement (17) befestigt werden soll,
- Betätigen der ersten Spannvorrichtung (3) und/oder der zweiten Spannvorrichtung (21) zum Erhöhen oder Verringern der Spannung auf dem Ladungssicherungselement (16).

14. Verfahren nach Anspruch 12 oder 13, wobei das Verfahren Folgendes umfasst:
- Betätigen der ersten Spannvorrichtung (3) beim Empfangen eines Spannungs- oder Freigabeauslösers.

## Revendications

1. Agencement de fixation de charge de véhicule (1) comprenant un premier dispositif de fixation de charge (2) agencé pour pouvoir être fixé à un élément de fixation de charge (16) et un premier dispositif de tension (3) agencé pour être fixé au premier dispositif de fixation de charge (2) par un premier élément de tension (7), le premier dispositif de fixation de charge (2) étant agencé pour être relié à une partie de carrosserie de véhicule (8) ou à une partie de châssis de véhicule (8), le premier dispositif de fixation de charge (2) étant agencé pour être mobile dans une direction axiale du premier dispositif de fixation de charge (2) dans une première ouverture dans une surface de chargement (11) d'un véhicule (24) en actionnant le premier dispositif de tension (3), **caractérisé en ce qu'un** premier moyen de détection de force est disposé sur le premier dispositif de fixation de charge (2) ou le premier dispositif de tension (3) et agencé pour détecter une force de tension exercée sur l'élément de fixation de charge (16) par le premier dispositif de fixation de charge (2), le premier dispositif de tension (3) augmentant la tension jusqu'à ce qu'une force de tension prédéterminée exercée sur l'élément de fixation de charge (16) par le premier dispositif de fixation de charge (2) soit détectée par le premier moyen de détection de force.

2. Agencement de fixation de charge de véhicule (1) selon l'une quelconque des revendications précédentes, dans lequel le premier dispositif de fixation de charge (2) est agencé pour être relié à la partie de carrosserie de véhicule (8) ou à la partie de châssis de véhicule (8) avec un élément élastique (14).

3. Agencement de fixation de charge de véhicule (1) selon l'une quelconque des revendications précédentes, dans lequel le premier dispositif de fixation de charge (2) est agencé pour être positionné sous la surface de chargement (11) dans un état inactif et est agencé pour faire saillie hors de la surface de chargement (11) dans un état actif, et dans lequel le premier dispositif de fixation de charge (2) est mis dans l'état actif sur une entrée utilisateur ou par le premier dispositif de fixation de charge (2) étant exercé à une force axiale.

4. Agencement de fixation de charge de véhicule (1) selon l'une quelconque des revendications précédentes, dans lequel l'agencement (1) comprend en outre un deuxième dispositif de fixation de charge (15) agencé pour pouvoir être fixé à l'élément de fixation de charge (16) et au premier dispositif de tension (3) par un deuxième élément dispositif de tension (17), dans lequel le deuxième dispositif de fixation de charge (15) est agencé pour être relié à une partie de carrosserie de véhicule (8) ou à une partie de châssis de véhicule (8), le deuxième dispositif de fixation de charge (15) est agencé pour être mobile dans une direction axiale du deuxième dispositif de fixation de charge (15) dans une deuxième ouverture (18) dans la surface de chargement (11) d'un véhicule (24) en actionnant le premier dispositif de tension (3).

5. Agencement de fixation de charge de véhicule (1) selon l'une quelconque des revendications 1 à 3, dans lequel l'agencement (1) comprend en outre un deuxième dispositif de fixation de charge (15) agencé pour pouvoir être fixé à l'élément de fixation de charge (16) et au deuxième dispositif de tension (21) par un deuxième élément dispositif de tension (17), dans lequel le deuxième dispositif de fixation de charge (15) est agencé pour être relié à une partie de carrosserie de véhicule (8) ou à une partie de châssis de véhicule (8), le deuxième dispositif de fixation de charge (15) est agencé pour être mobile dans une direction axiale du deuxième dispositif de fixation de charge (15) dans une deuxième ouverture (18) dans la surface de chargement (11) du véhicule (24) en actionnant le deuxième dispositif de tension (21).

6. Agencement de fixation de charge de véhicule (1) selon la revendication 5, dans lequel un deuxième moyen de détection de force est arrangé sur le deuxième dispositif de fixation de charge (15) ou le deuxième dispositif de tension (21), le deuxième moyen de détection de force étant agencé pour détecter une force de tension exercée sur l'élément de fixation de charge (16) par le deuxième dispositif de fixation de charge (15),
dans lequel le deuxième dispositif de tension (21) augmente la tension jusqu'à ce qu'une force de tension prédéterminée exercée sur l'élément de fixation de charge (16) par le deuxième dispositif de fixation de charge (15) soit détectée par le deuxième moyen de détection de force.

7. Agencement de fixation de charge de véhicule (1) selon l'une quelconque des revendications 4 to 6, dans lequel le deuxième dispositif de fixation de charge (15) est agencé pour être relié à la partie de carrosserie de véhicule (8) ou à la partie de châssis de véhicule (8) avec un élément élastique (14).

8. Agencement de fixation de charge de véhicule (1) selon l'une quelconque des revendications précédentes, dans lequel le premier et / ou le deuxième dispositif de tension (3, 21) est l'un parmi :
- un sangle à cliquet automatique,
- un enrouleur de ceinture,
- un système de poulie manuelle,
- une tige filetée reliée à un engrenage à vis sans fin ou à un actionneur à vis,
- un cylindre et piston hydraulique.

9. Agencement de fixation de charge de véhicule (1) selon l'une quelconque des revendications précédentes, dans lequel le premier dispositif de tension (3) et / ou le deuxième dispositif de tension (21) est agencé pour appliquer une tension au premier dispositif de fixation de charge (2) et / ou au deuxième dispositif de fixation de charge (15) lors de la réception d'un déclencheur de tension, dans lequel le déclencheur de tension est l'un :
- du démarrage du véhicule (24),
- de l'identification du conducteur et / ou du passager assis dans le véhicule (24),
- l'activation par le conducteur ou le passager,
- la fermeture du compartiment à bagages / stockage (25) du véhicule (24).

10. Agencement de fixation de charge de véhicule (1) selon l'une quelconque des revendications précédentes, dans lequel le premier et / ou le deuxième dispositif de tension (3, 21) sont agencés pour relâcher la tension du premier et / ou du deuxième dispositif de fixation de charge (2, 15) lors de la réception d'un déclencheur de libération.

11. Véhicule (24) comprenant un agencement de fixation de charge de véhicule (1) selon l'une quelconque des revendications précédentes.

12. Procédé pour fixer une charge (13) dans un véhicule (24), dans lequel le procédé comprend les étapes consistant à :
- fixer un premier dispositif de fixation de charge (2) à une partie de carrosserie de véhicule (8) ou à une partie de châssis de véhicule (8), agencé pour être mobile dans une direction axiale du premier dispositif de fixation de charge (2) dans une première ouverture (12) dans une surface de chargement (11) du véhicule (24), un élément de fixation de charge (16) étant fixé au premier dispositif de fixation de charge (2),
- arranger un premier dispositif de tension (3) pour être fixé au premier dispositif de fixation de charge (2) par un premier élément de tension (7),
- arranger un premier moyen de détection de force sur le premier dispositif de fixation de charge (2) ou le premier dispositif de tension (3) et agencé pour détecter une force de tension exercée sur l'élément de fixation de charge (16) par le premier dispositif de fixation de charge (2),
- faire fonctionner le premier dispositif de tension (3) pour augmenter ou diminuer la tension sur l'élément de fixation de charge (16), le premier dispositif de tension (3) augmentant la tension jusqu'à ce qu'une force de tension prédéterminée exercée sur l'élément de fixation de charge (16) par le premier dispositif de fixation de charge (2) soit détectée par le premier moyen de détection de force.

13. Procédé selon la revendication 12, dans lequel le procédé comprend l'étape consistant à :
- fixer un deuxième dispositif de fixation de charge (15) à la partie de carrosserie de véhicule (8) ou à une partie de châssis de véhicule (8), agencé pour être mobile dans une direction axiale du deuxième dispositif de fixation de charge (15) dans une deuxième ouverture (18) dans la surface de chargement (11) du véhicule (24),
- arranger un premier dispositif de tension (3) ou un deuxième dispositif de tension (21) pour être fixé au deuxième dispositif de fixation de charge (15) par un deuxième élément de tension (17),
- faire fonctionner le premier dispositif de tension (3) et / ou le deuxième dispositif de tension (21) pour augmenter ou diminuer la tension sur l'élément de fixation de charge (16).

14. Procédé selon la revendication 12 ou 13, dans lequel le procédé comprend l'étape consistant à :
- faire fonctionner le premier dispositif de tension (3) à la réception d'un déclencheur de tension ou de relâchement.
